Europäisches Patentamt

European Patent Office

Office européen des brevets

(19)

(11) Numéro de publication : **0 050 245**
**B1**

(12) **FASCICULE DE BREVET EUROPÉEN**

(45) Date de publication du fascicule du brevet :
**04.07.84**

(21) Numéro de dépôt : **81107809.6**

(22) Date de dépôt : **01.10.81**

(51) Int. Cl.³ : **B 65 G 63/02,** B 65 G 67/02,
B 65 G 47/61

(54) **Installation pour l'enlèvement et la réception automatiques de charges par l'intermédiaire de véhicules de transport.**

(30) Priorité : **21.10.80 CH 7830/80**

(43) Date de publication de la demande :
**28.04.82 Bulletin 82/17**

(45) Mention de la délivrance du brevet :
**04.07.84 Bulletin 84/27**

(84) Etats contractants désignés :
**AT BE DE FR IT NL**

(56) Documents cités :
**DE-A- 1 943 854**
**DE-C- 452 981**
**DE-C- 1 002 245**
**FR-A- 693 353**
**GB-A- 249 685**

(73) Titulaire : **INVENTIO AG**
**Seestrasse 55**
**CH-6052 Hergiswil NW (CH)**

(72) Inventeur : **Heiz, Ulrich, Dipl.-Ing.**
**Staatsstrasse 94**
**CH-3044 Säriswil (CH)**

## Description

L'invention concerne une installation pour l'enlèvement et la réception automatique de charges par l'intermédiaire de véhicules de transport, dans laquelle, au moyen du mouvement d'un véhicule de transport déplacé relativement à une station de réception, une charge transportable dans un plan horizontal par le véhicule de transport peut être enlevée du véhicule de transport et être placée sur la station de réception et/ou inversement, et dans laquelle un transporteur sans fin porté par un bâti stationnaire et s'étendant dans la direction de déplacement du véhicule de transport est prévu à la station de réception et comporte une partie de transport de charge horizontale, servant à la réception de la charge, précédée d'une partie de transport de charge inclinée vers le bas sécante au plan horizontal dans lequel la charge peut être transportée par le véhicule de transport.

Les installations dans lesquelles seul le mouvement du véhicule de transport est déterminant pour l'enlèvement de la charge du véhicule et son dépôt sur une station de réception ou vice versa ont l'avantage de réduire les risques qu'un déplacement dans le sens longitudinal puisse se produire entre la charge transportée et le véhicule de transport lors des opérations précitées.

Une installation connue de ce type, plus précisément destinée à la réception automatique de palettes, depuis des wagons de transport, sur deux chemins de roulement parallèles disposés stationnaires à une station de réception, est montrée dans la demande allemande publiée n° 1 943 854. Dans cette installation, chaque wagon de transport est pourvu d'appuis verticaux sur lesquels la charge peut être placée de manière à pouvoir être soulevée. Au moyen de la rampe d'accès d'une plate-forme stationnaire disposée à la station de réception sur le trajet du wagon, le wagon de transport est soulevé jusqu'à ce que la charge qu'il porte soit placée au-dessus des deux chemins de roulement. Lors du mouvement descendant du wagon quittant la plate-forme, la charge est libérée et se pose sur les galets des deux chemins de roulement.

Par le fait que le véhicule de transport et la charge transportée doivent être chaque fois soulevés ensemble par la rampe de la plate-forme, une telle installation convient difficilement pour l'enlèvement et la réception de charges lourdes. Un autre inconvénient réside dans le fait que la plate-forme, pour laquelle sont nécessaires une partie horizontale de réception et deux parties inclinées respectivement d'accès et de sortie, accroît sensiblement la longueur de l'installation, ceci d'autant plus lorsque les charges transportées sont de grande longueur. Enfin, ce type d'installation ne conviendrait guère si les opérations devaient être inversées, c'est-à-dire si la charge devait être enlevée des chemins de roulement et être déposée sur le wagon de transport. Dans ce cas, c'est le wagon de transport qui, lors d'un mouvement ascendant, devrait entraîner avec lui la charge disposée horizontalement. Une telle opération ne pourrait être effectuée qu'avec l'aide d'éléments d'entraînement appropriés, et la charge devrait chaque fois être placée sur les chemins de transport avec une grande précision par rapport à la plate-forme.

Dans une autre installation, montrée dans le brevet britannique n° 249 685, des charges à transférer d'un véhicule de transport à une station de réception doivent être portées par l'intermédiaire d'un véhicule auxiliaire lui-même disposé sur le véhicule de transport. Lors du déplacement du véhicule de transport relativement à la station de réception, les roues du véhicule auxiliaire s'engagent sur les extrémités inclinées de rails prévus à la station de réception et sur lesquels le véhicule auxiliaire et les charges qu'il porte peuvent être placés.

En dehors du fait qu'elle nécessite la mise en œuvre d'un véhicule auxiliaire, cette installation exige que le véhicule de transport soit pourvu d'éléments de retenue, capables d'être automatiquement enclenchés ou déclenchés selon que le véhicule auxiliaire doit être entraîné par le véhicule de transport ou libéré.

Dans d'autres installations connues, il est par ailleurs prévu d'effectuer l'enlèvement ou la réception des charges par l'intermédiaire d'un transporteur sans fin coopérant avec le véhicule de transport.

Ainsi, le brevet allemand DE-C-1 002 245 décrit une installation destinée à enlever d'une station de réception des bottes de fil métallique sortant d'un laminoir et à les accrocher séparément aux crochets de chariots de transport d'un chemin de fer à voie suspendue. Parallèlement au rail de guidage des chariots, la station de réception est pourvue d'un transporteur sans fin formé par deux chaînes d'entraînement parallèles qui présentent une partie de transport horizontale et entre lesquelles peuvent s'engager les crochets des chariots de transport. Les chariots de transport sont fixés à une chaîne d'entraînement déplacée en synchronisme avec le transporteur sans fin au moyen d'une installation d'entraînement commune. Dans la direction de déplacement, la partie de transport horizontale du transporteur sans fin est prolongée par une partie de transport inclinée vers le bas de façon à s'écarter du trajet horizontal suivi par les chariots de transport. Lors de son transport par la partie inclinée, qui se trouve de la sorte sécante au plan horizontal dans lequel se déplace l'extrémité des crochets engagés entre les deux chaînes du transporteur sans fin, chaque botte de fil est saisie par le crochet du chariot de transport respectif auquel elle reste suspendue.

Ce mode d'enlèvement de charges à l'aide d'un transporteur sans fin présentant une partie inclinée permet d'éviter d'avoir à soulever le véhicule de transport. La synchronisation du déplacement des chariots de transport et du déplacement du transporteur sans fin exigée dans la solution précitée implique toutefois la mise en œuvre d'un système d'entraînement complexe et coûteux qu'il serait difficile d'envisager pour le transport de charges lourdes, notamment par des véhicules appelés à se déplacer sur le sol à des intervalles de temps plus ou moins réguliers ou de manière arbitraire.

Dans une autre installation connue décrite dans le brevet allemand DE-C-452 981 et servant à la réception, à une station de réception, de charges également transportées par les chariots d'un transporteur à voie suspendue, la station de réception est pourvue d'une bande de transport sans fin dont la partie inclinée sécante au plan horizontal dans lequel les charges sont transportées précède cette fois la partie de transport horizontale dans le sens du déplacement. Pour faire passer la charge d'un chariot de transport sur la partie de transport horizontale de la bande à la faveur de la partie inclinée, la bande sans fin est entraînée à une vitesse supérieure à celle du déplacement du chariot.

Une telle installation exige la mise en œuvre d'un mécanisme d'entraînement capable de fournir deux vitesses de déplacement ou de deux mécanismes d'entraînement distincts. Un autre inconvénient réside dans le fait qu'un glissement relatif se produit entre la charge transportée et/ou le chariot de transport. De plus, cette installation ne peut convenir à l'enlèvement de charges depuis la station de réception.

Le brevet français FR-A-693 353 enfin décrit une installation dans laquelle, pour la réception de charges dans un récipient prévu à une station de réception respectivement pour l'enlèvement par des chariots de transport de charges déposées sur une bande sans fin de la station de réception, chaque chariot de transport est équipé d'une bande de transport sans fin horizontale sur laquelle peut être disposée une charge à transporter. A la station de réception est prévu un taquet qui, lors du déplacement d'un chariot relativement à la station de réception, entraîne la bande sans fin du chariot dans la direction opposée de sorte que la charge tombe automatiquement dans le récipient prévu à la station de réception. Pour l'enlèvement d'une autre charge placée sur la bande sans fin prévue à la station de réception et placée plus haut que celles des chariots de transport, chaque chariot de transport est également pourvu d'un taquet par lequel la bande sans fin de la station de réception est entraînée dans la même direction, de sorte que la charge qu'elle supporte bascule et tombe sur la bande sans fin du chariot.

Du fait qu'à chaque opération la charge n'est pas déposée mais qu'elle chute dans un récipient ou sur une bande de transport associée au véhicule, cette installation ne peut convenir au transport de lourdes charges. La nécessité de pourvoir chaque véhicule d'une bande de transport augmente par ailleurs considérablement le coût d'une telle installation.

L'invention s'est fixé comme but d'apporter un remède aux difficultés rencontrées avec les installations précitées, notamment en créant une installation dans laquelle pour l'enlèvement ou la réception automatique d'une charge à la faveur du plan incliné d'un transporteur sans fin disposé à la station de réception, seul le déplacement du véhicule de transport relativement à la station soit déterminant.

Ce but est atteint avec l'installation de l'invention telle qu'elle est caractérisée par la revendication 1. D'autres formes avantageuses d'exécution de l'invention ressortent des revendications 2 à 9.

Etant donné que c'est le véhicule de transport qui entraîne lui-même le transporteur sans fin lors de son déplacement relativement à la station de réception, il n'est plus nécessaire de prévoir, pour le transporteur sans fin, un dispositif d'entraînement séparé synchronisé avec le déplacement du véhicule de transport. La construction de l'installation s'en trouve notablement simplifiée. Un autre avantage majeur de l'installation de l'invention réside dans le fait qu'elle peut fonctionner automatiquement aussi bien pour l'enlèvement que pour la réception de charges, ceci même dans le cas où elle met en œuvre une pluralité de véhicules de transport irrégulièrement espacés ou déplacés arbitrairement.

Deux formes d'exécution possibles de l'invention sont décrites ci-après, en référence aux dessins annexés, dans lesquels :

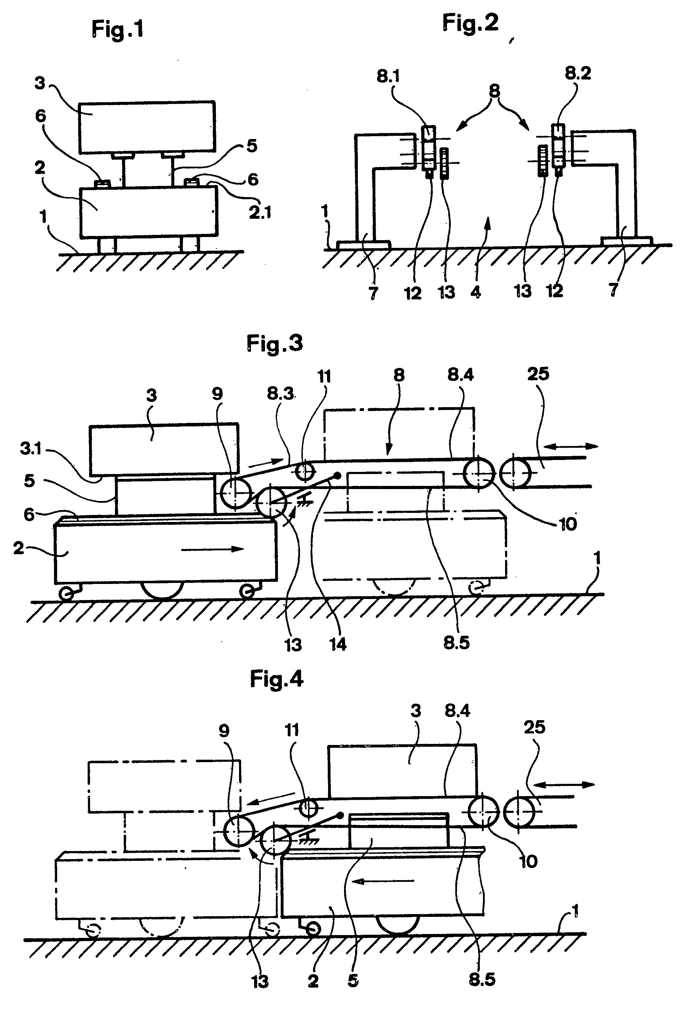

Les figures 1 et 2 sont des vues schématiques frontales respectivement d'un véhicule portant une charge et de la station de réception de charges d'une installation selon une première forme d'exécution de l'invention ;

Les figures 3 et 4 sont des vues schématiques de côté du véhicule de transport et de la station de réception selon les figures 1 et 2, respectivement lors du déplacement du véhicule pour l'enlèvement d'une charge et sa réception à la station de réception et lors du déplacement du véhicule pour les opérations inverses ;

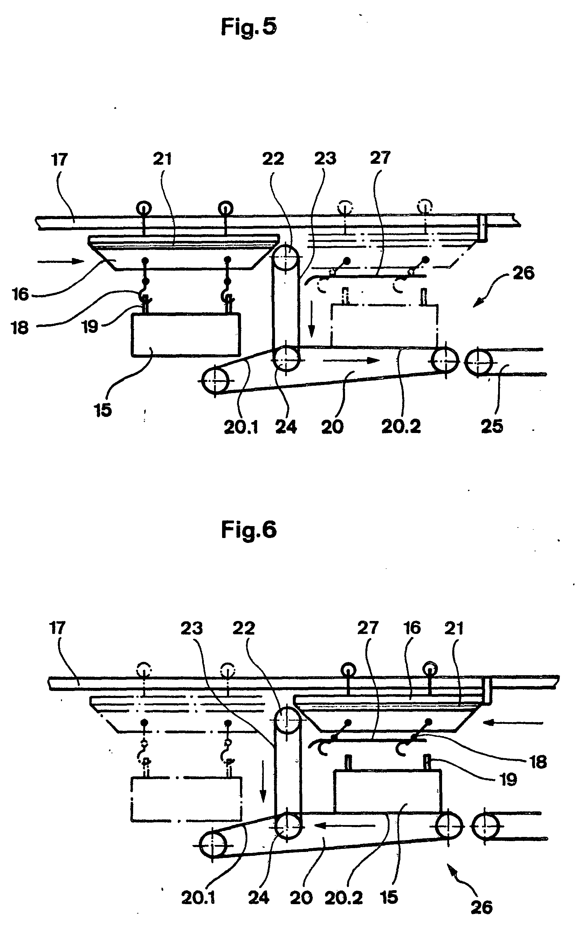

Les figures 5 et 6 sont des vues schématiques de côté montrant, lors d'opérations similaires à celles représentées par les figures 3 et 4, le véhicule de transport et la station de réception d'une installation selon une autre forme d'exécution de l'invention, le véhicule de transport étant constitué par un chariot de transport d'une installation de chemin de fer à voie suspendue.

Dans les figures 1 à 4, la référence 1 désigne le sol d'une construction sur lequel un véhicule de transport 2 est appelé à se déplacer en vue du transfert automatique de charges 3 du véhicule de transport 2 à une station de réception 4 ou vice versa. Le déplacement du véhicule de transport 2 s'opère à partir de moyens d'entraînement consistant, par exemple, en une installation d'entraînement autonome éventuellement commandée à distance et disposant d'une source d'énergie également autonome ou commune à plusieurs véhicules, ou encore en une installation d'entraînement commune à une suite de véhicules de transport. De tels moyens d'entraînement, qui ne sont pas en liaison directe avec l'invention, n'ont pas été représentés.

A la partie supérieure 2.1 du châssis du véhicule de transport 2 est prévu un support de charge 5 qui s'étend symétriquement à l'axe longitudinal du véhicule de transport 2 et sur lequel une charge 3 peut être déposée et être transportée par le véhicule selon un plan horizontal, autrement dit parallèlement au sol 1, la largeur du support de charge 5 étant inférieure à celle de la charge transportée 3. La partie supérieure 2.1 du châssis du véhicule de transport 2 est par ailleurs pourvue de deux crémaillères 6 qui s'étendent de part et d'autre du support de charge 5 sur toute la longueur du véhicule de transport 2, c'est-à-dire longitudinalement à la direction de déplacement de ce dernier.

La station de réception 4 (fig. 2) comporte un bâti stationnaire 7 constitué de deux éléments parallèles fixés au sol 1, entre lesquels le véhicule de transport 2 est appelé à se déplacer. Entre les deux éléments du bâti stationnaire 7 et s'étendant dans la direction de déplacement du véhicule de transport 2 est disposé un transporteur sans fin à chaînes 8 comportant deux chaînes de transport identiques 8.1, 8.2, parallèles entre elles, portées chacune par un des éléments du bâti stationnaire 7 et capables d'être entraînées ensemble d'une manière qui sera décrite plus loin. Les deux chaînes de transport 8.1, 8.2 sont portées de façon similaire par l'élément respectif du bâti stationnaire 7, chacune au moyen de deux roues à chaîne de renvoi 9, 10 et d'une roue de guidage 11 (fig. 3 et 4). L'axe de la roue à chaîne 9 placée du côté de l'introduction du véhicule de transport 2 est disposé plus bas que les axes des deux autres roues 10 et 11, de sorte que le transporteur sans fin 8 formé par les deux chaînes 8.1, 8.2 présente, dans le sens d'introduction du véhicule de transport, une partie inclinée vers le bas 8.3 précédant une partie horizontale 8.4 (fig. 3 et 4).

La longueur de la partie inclinée 8.3 est établie de façon que cette partie inclinée soit sécante au plan horizontal selon lequel la charge 3 peut être transportée par le véhicule de transport 2, autrement dit au plan horizontal suivi par la base 3.1 de la charge 3. Les brins inférieurs 8.5 des deux chaînes de transport 8.1, 8.2 s'étendent par ailleurs au-dessus du plan horizontal de déplacement des deux crémaillères 6, et la distance qui sépare l'une de l'autre les deux chaînes de transport 8.1, 8.2 est supérieure à la largeur occupée par les deux crémaillères 6, donc à la largeur du support de charge 5, alors qu'elle est inférieure à la largeur de la charge 3.

L'entraînement synchronisé des deux chaînes de transport 8.1, 82 est obtenu au moyen d'une paire de mécanismes d'entraînement constitués chacun d'une roue à chaîne 12 qui actionne le brin inférieur 8.5 d'une des chaînes de transport 8.1, 8.2 et est disposée coaxialement à une roue dentée 13 par laquelle elle peut être entraînée en rotation. L'axe horizontal commun à la roue à chaîne 12 et à la roue dentée 13 de chaque mécanisme d'entraînement est situé plus bas que le brin inférieur 8.5 des chaînes de transport 8.1, 8.2, et chaque roue dentée 13 est disposée sur l'axe de manière à pouvoir s'engrener avec l'une des crémaillères 6 lorsque le véhicule de transport 2 se déplace relativement au bâti stationnaire 7. Ainsi, lors de l'introduction du véhicule de transport 2 entre les éléments du bâti stationnaire 7 aussi bien que lors de son éloignement de ces derniers, les deux roues dentées 13 sont entraînées en rotation par les éléments d'entraînement que constituent les deux crémaillères 6. Du fait que les roues à chaîne 12 agissent sur le brin inférieur 8.5 des chaînes de transport 8.1, 8.2, ces dernières peuvent être déplacées ensemble, en même temps que le véhicule de transport 2 et dans la même direction. Le dimensionnement des roues à chaîne 12 et des roues dentées 13 est par ailleurs établi de façon que le déplacement des chaînes de transport 8.1, 8.2 s'effectue à la vitesse de déplacement du véhicule de transport 2. De préférence, les axes de roues à chaîne 12 et de roues dentées 13 sont portés par le bâti stationnaire 7 par l'intermédiaire de bras pivotants 14, au moyen desquels la denture des roues dentées 13 peut être placée légèrement plus bas que celle des crémaillères 6 et les chaînes de transport 8.1, 8.2 soumises de ce fait à une tension lors du déplacement du véhicule de transport 2.

Dans les représentations schématiques des figures 3 et 4, les éléments du bâti stationnaire 7 n'ont pas été montrés pour plus de clarté. La figure 3 montre que lors du déplacement du véhicule de transport 2 dans le sens de la flèche, c'est-à-dire entre les deux éléments du bâti stationnaire 7, la charge 3 sera soulevée depuis sa partie frontale par la partie inclinée 8.3 du transporteur sans fin 8 et déplacée en même temps que le véhicule de transport 2. En fin de course, la charge 3 sera seulement supportée par la partie horizontale 8.4 du transporteur qui constitue de ce fait une partie de réception de la charge. Inversement, comme le montre la figure 4, la charge 3 disposée sur la partie horizontale 8.4 du transporteur sans fin 8 sera abaissée par la partie inclinée 8.3 et placée sur le support de charge 5 du véhicule de transport 2 lors du déplacement de ce dernier dans le sens opposé.

L'installation selon l'invention permet ainsi, à volonté, d'enlever une charge placée sur un véhicule de transport et de la déposer sur une station de réception ou d'effectuer les opérations inverses, ceci à partir du seul mouvement du véhicule et sans qu'il soit nécessaire ni de soulever le véhicule de transport ni de faire appel à un véhicule auxiliaire.

Avantageusement, en vue de permettre d'introduire le véhicule de transport 2 entre les éléments du bâti stationnaire 7 ou de l'éloigner de ce dernier sans que le transporteur sans fin 8 soit déplacé, l'installation peut être pourvue d'un ou plusieurs mécanismes d'embrayage à roue libre. De tels mécanismes, qui pourraient par exemple être disposés entre chaque roue à chaîne 12 et la roue dentée associée 13 et être commandés manuellement ou automatiquement, n'ont pas été représentés.

Les figures 3 et 4 montrent encore qu'un chemin de transport, automatique ou non, tel qu'un second transporteur sans fin 25, peut être disposé à proximité de la station de réception 4 pour transporter plus loin ou amener à la station de réception 4 des charges 3, par exemple en vue d'alimenter ou de libérer des postes de travail. A cet effet, un dispositif d'entraînement supplémentaire, capable d'entraîner le transporteur sans fin 8 sans l'intervention du véhicule de transport 2, est à prévoir. Ce dispositif, qui n'a pas été représenté, pourrait être constitué de moteurs d'entraînement respectivement associés à l'une des roues à chaîne de renvoi 9 ou 10 et être capables d'entraîner, le cas échéant, le transporteur sans fin 8 à la même vitesse que celle du second transporteur sans fin 25. Si nécessaire, un mécanisme d'embrayage à roue libre pourrait également être associé à ce dispositif.

Dans la seconde forme d'exécution de l'invention, schématiquement représentée par les figures 5 et 6, le véhicule de transport utilisé au transport d'une charge 15 est un chariot de transport 16 d'une installation de chemin de fer à voie suspendue. Le chariot de transport 16, qui circule sur un rail de guidage 17, est pourvu de dispositifs de préhension constitués par des crochets pivotants 18 auxquels la charge peut être accrochée par l'intermédiaire d'œillets 19. Pour l'entraînement d'un transporteur sans fin 20, porté par un bâti stationnaire non représenté d'une station de réception 26 et présentant, conformément à l'invention, une partie inclinée 20.1 sécante au plan horizontal selon lequel la charge 15 est transportée et une partie horizontale 20.2 servant à la réception de charge, des crémaillères 21 sont prévues sur le bâti du chariot de transport 16. L'entraînement du transporteur sans fin 20 à partir du mouvement du chariot de transport 16 s'effectue cette fois par l'intermédiaire de mécanismes d'entraînement comportant des roues d'entraînement 22 qui s'engrènent avec les crémaillères 21 et qui, par l'intermédiaire de roues à chaîne et de chaînes d'entraînement 23, entraînent en rotation des roues de guidage 24 constituées en tant que roues à chaîne actionnant le transporteur sans fin 20. La position en hauteur de la partie horizontale 20.2 du transporteur sans fin 20 est prévue de façon qu'une fois la charge 15 placée sur cette partie horizontale lors de sa réception (fig. 5) ou en vue de son enlèvement (fig. 6), les crochets mobiles 18 soient automatiquement dégagés des œillets 19. A cet effet, un dispositif d'actionnement des crochets, constitué par une came stationnaire 27, est prévu à la station de réception. Un tel dispositif pourrait également consister en un ou plusieurs moteurs disposés sur le chariot de transport 16 et commandés à part ou par des moyens de commutation stationnaires prévus à la station de réception.

Il va de soi que d'autres formes d'exécution peuvent être envisagées dans le cadre de l'invention. Ainsi, les deux chaînes de transport 8.1, 8.2, formant le transporteur sans fin 8, pourraient être reliées entre elles et être déplacées à partir de la rotation d'une seule roue d'entraînement 13. De même, au lieu de chaînes de transport, d'autres éléments de transport, tels que des bandes de transport sans fin ou tous autres éléments de transport de fonctionnement similaire, pourraient être utilisés et le transporteur sans fin ne comporter qu'un seul de ces éléments de transport entraîné à partir de la rotation d'une seule ou de deux roues d'entraînement. Enfin, l'entraînement par conjugaison de formes envisagé pour la roue d'entraînement pourrait être remplacé par un entraînement par friction, la ou les roues d'entraînement étant des roues à friction entraînées par une surface de friction correspondante prévue sur le véhicule de transport en tant qu'élément d'entraînement. Dans ce cas, une variation de la friction en fonction de la charge et, partant, une élimination des risques de glissement pourront être obtenues en disposant, comme déjà exposé, la ou les roues d'entraînement sur des bras de tension et/ou en prévoyant l'ensemble du transporteur sans fin légèrement pivotant sur le bâti stationnaire.

**Revendications**

1. Installation pour l'enlèvement et la réception automatiques de charges (3, 15) par l'intermédiaire de véhicules de transport (2, 16), dans laquelle, au moyen du mouvement d'un véhicule de transport (2, 16) déplacé relativement à une station de réception (4, 26), une charge (3, 15) transportable dans un plan horizontal par le véhicule de transport peut être enlevée du véhicule de transport et être placée sur la station de réception (4, 26) et/ou inversement, et dans laquelle un transporteur sans fin (8, 20) porté par un bâti stationnaire (7) et s'étendant dans la direction de déplacement du véhicule de transport est prévu à la station de réception et comporte une partie de transport de charge horizontale (8.4, 20.2), servant à la réception de la charge (3, 15), précédée d'une partie de transport de charge inclinée vers le bas (8.3, 20.1) sécante au plan horizontal dans lequel la charge peut être transportée par le véhicule de transport (2, 16), caractérisée en ce qu'à la station de réception (4, 26) est prévue au moins une roue d'entraînement (13, 22) qui, lors d'un déplacement horizontal du véhicule de transport (2, 16) relativement à la station de réception (4, 26), est entraînée en rotation par un élément d'entraînement (6, 21) porté par le véhicule de transport (2, 16) et s'étendant longitudinalement à la direction de déplacement, et par laquelle le transporteur sans fin (8, 20) peut être entraîné en même temps que le véhicule de transport (2, 16), dans la même direction et à la même vitesse.

2. Installation selon la revendication 1, caractérisée en ce que la ou les roues d'entraînement sont des roues dentées (13, 22), l'élément d'entraînement correspondant étant constitué par une crémaillère (6, 21).

3. Installation selon la revendication 1, caractérisée en ce que l'axe de la ou des roues d'entraînement (13) aussi bien que le plan horizontal de déplacement du ou des éléments d'entraînement (6) correspondants sont situés plus bas que le brain inférieur (8.5) du transporteur sans fin (8) et en ce que le transporteur sans fin (8) est entraîné à partir de son brin inférieur (8.5).

4. Installation selon la revendication 3, caractérisée en ce que le transporteur sans fin (8) est un transporteur à chaînes comportant deux chaînes de transport (8.1, 8.2) parallèles espacées l'une de l'autre et capables d'être entraînées ensemble au moyen d'une ou de deux roues à chaîne coaxiales à une seule roue d'entraînement ou de deux roues à chaîne (12) respectivement coaxiales à deux roues d'entraînement (13) entraînées chacune en rotation par un élément d'entraînement (6).

5. Installation selon la revendication 1, caractérisée en ce qu'au moins la ou les roues d'entraînement (13) prévues à la station de réception (4) sont portées par l'intermédiaire de bras de tension mobiles (14).

6. Installation selon la revendication 5, caractérisée en ce que la ou les roues d'entraînement (13) sont des roues à friction entraînées en rotation par une surface de friction correspondante prévue sur le véhicule de transport (2) et constituant l'élément d'entraînement (6).

7. Installation selon la revendication 1, caractérisée en ce que le véhicule de transport est constitué par un chariot de transport (16) d'une installation de chemin de fer à voie suspendue au moyen duquel une charge (15) peut être portée par l'intermédiaire d'éléments de préhension (18), un dispositif (24) d'actionnement des moyens de préhension (18) étant prévu à la station de réception (26) et/ou sur le chariot de transport (16) pour libérer les moyens de préhension (18) de la charge (15) ou les engager avec la charge (15) selon que la charge (15) est à déposer sur la partie horizontale (20.2) du transporteur sans fin (20) ou à enlever de celle-ci.

8. Installation selon la revendication 1, caractérisée en ce qu'entre la ou chaque roue d'entraînement (13, 22) et le transporteur sans fin (8, 20) est prévu un mécanisme à roue libre par l'intermédiaire duquel le déplacement du véhicule de transport (2, 16) relativement à la station de réception (4, 26) peut être effectué sans que soit entraîné le transporteur sans fin (8, 20).

9. Installation selon la revendication 1, caractérisée en ce qu'elle comporte une installation d'entraînement supplémentaire, au moyen de laquelle le transporteur sans fin (8, 20) peut être entraîné sans l'intervention du véhicule de transport (2, 16).

**Claims**

1. Installation for the automatic removal and reception of loads (3, 15) through the intermediary of transport vehicles (2, 16), in which, by means of the movement of a transport vehicle displaced relatively to a reception station (4, 26), a load (3, 15) transportable in a horizontal plane by the transport vehicle can be removed from the transport vehicle and be placed upon the reception station (4, 26) and/or inversely, and in which an endless conveyor (8, 20) supported by a stationary frame and extending in the direction of displacement of the transport vehicle is provided at the reception station and comprises a horizontal load transport portion (8.4, 20.2) serving for the reception of the load (3, 15), preceded by a downwardly inclined load transport portion (8.3, 20.1) intersecting the horizontal plane in which the load (3, 15) can be transported by the transport vehicle (2, 16), characterized in that at the reception station (4, 26) there is provided at least one drive wheel (13, 22) which, during a horizontal displacement of the transport vehicle (2, 16) relative to the reception station (4, 26), is rotationally entrained by a drive element (6, 21) carried by the transport vehicle (2, 16) and extending longitudinally of the direction of displacement, and by which the endless conveyor (8, 20) can be entrained at the same time as the transport vehicle (2, 16), in the same direction and at the same speed.

2. Installation according to claim 1, characterized in that the drive wheel or wheels are toothed wheels (13, 22), the corresponding drive element being constituted of a toothed rack (6, 21).

3. Installation according to claim 1, characterized in that the axle of the drive wheel or wheels (13) and also the horizontal plane of displacement of the corresponding drive element or elements (6) are situated lower down that the lower side (8.5) of the endless conveyor (8) and in that the endless conveyor (8) is driven from its lower side (8.5).

4. Installation according to claim 3, characterized in that the endless conveyor (8) is a chain conveyor comprising two conveying chains (8.1, 8.2) spaced apart parallel one from the other and capable of being entrained together by means of one or two chain wheels coaxial with a single drive wheel or of two chain wheels (12) coaxial respectively with two drive wheels (13) each rotationally driven by a drive element (6).

5. Installation according to claim 1, characterized in that at least the drive wheel or wheels (13) provided at the reception station (4) are carried through the intermediary of mobile tension arms (14).

6. Installation according to claim 5, characterized in that the drive wheel or wheels (13) are friction wheels rotationally driven by a corresponding friction surface provided upon the transport vehicle (2) and constituting the drive element (6).

7. Installation according to claim 1, characterized in that the transport vehicle is constituted of a transport trolley (16) of a suspended track railway installation by means of which a load (15) can be carried through the intermediary of attachment elements (18), a device (27) for actuating the attachment means (18) being provided at the reception station (26) and/or upon the transport trolley (16) for releasing the attachment means (18) from the load (15) or for engaging them with the load (15), according to whether the load (15) is to be disposed upon the horizontal portion (20.2) of the endless conveyor (20) or is to be removed from the latter.

8. Installation according to claim 1, characterized in that, between the drive wheel or each drive wheel (13, 22) and the endless conveyor (8, 20), there is provided a free-wheel mechanism through the intermediary of which the displacement of the transport vehicle (2, 16) relative to the reception station (4, 26) can be effected without the endless conveyor (8, 20) being driven.

9. Installation according to claim 1, characterized in that it comprises a supplementary drive installation, by means of which the endless conveyor (8, 20) can be driven without the intervention of the transport vehicle (2, 16).

**Ansprüche**

1. Vorrichtung zum automatischen Abheben und Empfangen von Lasten (3, 15) durch Transportfahrzeuge (2, 16), bei welcher, mittels der Bewegung eines relativ zu einer Empfangsstation (4, 26) verschobenen Transportfahrzeuges (2, 16), eine durch das Transportfahrzeug (2, 16) in einer horizontalen Ebene transportierbare Last (3, 15) vom Transportfahrzeug (2, 16) abgehoben und auf die Empfangsstation (4, 26) aufgesetzt werden kann und/oder umgekehrt, und bei welcher an der Empfangsstation ein von einem stationären Gestell (7) getragener und sich in Verschieberichtung des Transportfahrzeuges erstreckender Endlosförderer (8, 20) vorgesehen ist, welcher einen der Aufnahme der Last (3, 15) dienenden horizontalen Lasttransportteil (8.4, 20.2) und einen vor dem horizontalen Lasttransportteil angeordneten, nach unten geneigten, die horizontale Ebene, in welcher die Last durch das Transportfahrzeug (2, 16) transportiert werden kann, schneidenden Transportteil (8.3, 20.1) aufweist, dadurch gekennzeichnet, dass an der Empfangsstation (4, 26) mindestens ein Antriebsrad (13, 22) vorgesehen ist, welches, während einer Horizontalverschiebung des Transportfahrzeuges (2, 16) relativ zur Empfangsstation (4, 26), durch ein vom Transportfahrzeug (2, 16) getragenes und sich der Länge nach in Verschieberichtung erstreckendes Antriebselement (6, 21) drehend angetrieben ist, und durch welches der Endlosförderer (8, 20) gleichzeitig mit dem Transportfahrzeug (2, 16), in gleicher Richtung und mit gleicher Geschwindigkeit, antreibbar ist.

2. Vorrichtung nach Anspruch 1, dadurch gekennzeichnet, dass das oder die Antriebsräder Zahnräder (13, 22) sind, wobei das entsprechende Antriebselement durch eine Zahnstange (6, 21) gebildet ist.

3. Vorrichtung nach Anspruch 1, dadurch gekennzeichnet, dass die Achse des oder der Antriebsräder (13) sowie die horizontale Verschiebeebene des oder der entsprechenden Antriebselemente (6) tiefer angeordnet sind als das untere Trumm (8.5) des Endlosförderers (8), und dass der Endlosförderer (8) an seinem unteren Trumm (8.5) angetrieben ist.

4. Vorrichtung nach Anspruch 3, dadurch gekennzeichnet, dass der Endlosförderer (8) ein Kettenförderer ist, welcher zwei parallele Transportketten (8.1, 8.2) aufweist, die voneinander distanziert angeordnet sind und miteinander angetrieben werden können mittels eines oder zwei koaxial zu einem einzigen Antriebsrad angeordneten Kettenrädern (12), oder mittels zwei Kettenräder (12), je koaxial zu einem von zwei Antriebsrädern (13) angeordnet, die jedes durch ein Antriebselement (6) drehend angetrieben sind.

5. Vorrichtung nach Anspruch 1, dadurch gekennzeichnet, dass mindestens das oder die an der Empfangsstation (4) vorgesehenen Antriebsräder (13) über bewegliche Spannarme getragen sind.

6. Vorrichtung nach Anspruch 5, dadurch gekennzeichnet, dass das oder die Antriebsräder (13) Reibräder sind, welche durch eine entsprechende auf dem Transportfahrzeug (2) vorgesehene und das Antriebselement (6) bildende Reibfläche drehend angetrieben sind.

7. Vorrichtung nach Anspruch 1, dadurch gekennzeichnet, dass das Transportfahrzeug durch einen Transportwagen (16) einer Hängebahnanlage gebildet ist, mittels welchem über Greiforgane (18) eine Last (15) getragen werden kann, wobei an der Empfangsstation (26) und/oder auf dem Transportwagen (16) eine Vorrichtung (24) zur Betätigung der Greiforgane (18) vorgesehen ist, die die Greiforgane (18) von der Last (15) freimacht oder sie die Last (15) ergreifen lässt, je nachdem die Last (15) auf den horizontalen Teil (20.2) des Endlosförderers (20) aufzusetzen oder von demselben abzuheben ist.

8. Vorrichtung nach Anspruch 1, dadurch gekennzeichnet, dass zwischen dem oder jedem Antriebsrad (13, 22) und dem Endlosförderer (8, 20) ein Freilaufrad-Mechanismus vorgesehen ist, über welchen die Verschiebung des Transportfahrzeuges (2, 16) relativ zur Empfangsstation (4, 26) erfolgen kann, ohne dass der Endlosförderer (8, 20) angetrieben wird.

9. Vorrichtung nach Anspruch 1, dadurch gekennzeichnet, dass sie eine zusätzliche Antriebsvorrichtung aufweist, mittels welcher der Endlosförderer (8, 20) ohne den Einsatz des Transportfahrzeuges (2, 16) angetrieben werden kann.

**Fig.1**

**Fig.2**

**Fig.3**

**Fig.4**

## Fig. 5

**17** **21** **22** **23** **27**

**26**

**16**

**18** **19**

**15**

**20.1** **24** **20** **20.2** **25**

## Fig. 6

**17** **23** **22** **27** **16** **21**

**18**

**19**

**20.1** **24** **20** **20.2** **15**

**26**